# EUROPEAN PATENT SPECIFICATION

(11) **EP 3 831 729 B1**
(45) Date of publication and mention of the grant of the patent: **02.07.2025**
(21) Application number: 19844698.1
(22) Date of filing: 29.07.2019
(51) Int. Cl.: B65B 19/28, B65B 19/12, G06T 7/73, G06T 7/00, B65B 57/00, B65B 57/02

(54) **SMOKING ARTICLE PACKAGING CONTAINER INSPECTION DEVICE, MANUFACTURING DEVICE, AND INSPECTION METHOD**
VORRICHTUNG ZUR INSPEKTION EINES RAUCHARTIKELVERPACKUNGSBEHÄLTERS, HERSTELLUNGSVORRICHTUNG UND HERSTELLUNGSVERFAHREN
DISPOSITIF D'INSPECTION DE CONTENANT D'EMBALLAGE D'ARTICLE À FUMER, DISPOSITIF DE FABRICATION ET PROCÉDÉ D'INSPECTION

(30) Priority: 31.07.2018 JP 2018143613
(43) Date of publication of application: 09.06.2021
(73) Proprietor: Japan Tobacco Inc., Tokyo 105-6927 (JP)
(72) Inventor: UENO, Makoto, Tokyo 130-8603 (JP)
(74) Representative: Hoffmann Eitle
(86) International application number: PCT/JP2019/029572
(87) International publication number: WO 2020/027015

(56) References cited:
- JP-A- 2001 525 586
- JP-A- 2012 199 476
- JP-A- H07 333 156
- JP-A- H07 333 156
- JP-B2- 5 834 757
- US-B1- 6 629 397

## Description

### TECHNICAL FIELD

The present invention relates to an inspection device, a manufacturing apparatus, and an inspection method for a packaging container for a smoking article.

### BACKGROUND ART

A device which can optically inspect a packaging container for a smoking article has hitherto been known (for example, refer to Patent Literature 1).
Further prior art can be found in JP H07 333156 relating to a state inspection apparatus for inspecting the glue state of gluing an object and JP 5 834757 B2 relating to a technique for inspecting the state of the location pasted by an apparatus.

### CITATION LIST

### PATENT LITERATURE

PTL 1: Japanese Patent Application Public Disclosure No. H06-288742

### SUMMARY OF INVENTION

### TECHNICAL PROBLEM

However, the device disclosed in Patent Literature 1 does not have a function for inspecting a position shift of an adhesive which is applied to a blank, from which a packaging container for a smoking article is constructed, and has a color identical with or similar to the color of the blank.

The present invention has been achieved in view of the above point; and an object of the present invention is to judge a position shift of an adhesive which is applied to a blank and has a color identical with or similar to the color of the blank, for manufacturing a packaging container for a smoking article.

### SOLUTION TO PROBLEM

The invention is defined by the independent claims while preferred embodiemnts are defined by the dependent claims. Further examples are provided for facilitating the understanding of the invention. For solving the above problem, a first mode of the present invention is an inspection device for judging a position shift of a test object to be inspected which is arranged on a blank, from which a packaging container for a smoking article can be constructed, and has a color similar to a color of the blank, and the inspection device for the smoking-article packaging container comprises: an illumination unit for illuminating, from a first direction, the blank which includes the test object; an imaging unit for taking an image of the blank including the test object from a second direction that is different from the first direction, and generating image data; and an image processing unit for identifying, based on brightness, a relative position of the test object with respect to the blank in the image data, wherein the image processing unit is constructed to perform: a process for identifying a position of the blank by detecting an edge of the blank in the image data; a process for dynamically setting in the image data a target arrangement area for the test object by using the detected edge of the blank as a position reference; a process for detecting the test object based on the brightness in the image data; a process for identifying relative positions of the detected test object and the target arrangement area; and a process for judging, based on the relative positions, whether the test object is positioned in the target arrangement area on the blank.

Further, a different mode of the present invention comprises the inspection device for the smoking-article packaging container in the above mode,
wherein the first direction and the second direction are set to have positional relationship that satisfies a condition that a bright part and a dark part are formed on a surface of the test object, that is viewed from a position of the imaging unit, by illumination by the illumination unit.

Further, a different mode of the present invention comprises the inspection device for the smoking-article packaging container in the above mode, wherein the first direction and the second direction are set to have positional relationship that satisfies a condition that the surface of the blank is darker than the bright part and brighter than the dark part.

Further, a different mode of the present invention comprises the inspection device for the smoking-article packaging container in the above mode, wherein the first direction is substantially parallel to the surface of the blank.

Further, a different mode of the present invention comprises the inspection device for the smoking-article packaging container in the above mode, wherein the second direction is substantially vertical to the surface of the blank.

Further, a different mode of the present invention comprises the inspection device for the smoking-article packaging container in the above mode, wherein the image processing unit is constructed to identify, in the image data, an image area which has brightness corresponding to at least one of the bright part and the dark part on the surface of the test object, in the process for detecting the test object.

Further, a different mode of the present invention comprises the inspection device for the smoking-article packaging container in the above mode, wherein the image processing unit is constructed to set the target arrangement area to be positioned in a position, that is a predetermined distance away from the detected edge of the blank, in the image data, in the process for setting the target arrangement area.

Further, a different mode of the present invention comprises the inspection device for the smoking-article packaging container in the above mode, wherein the image processing unit is constructed to perform a process for binarizing the image data, before performing the process for detecting the test object.

Further, a different mode of the present invention comprises the inspection device for the smoking-article packaging container in the above mode, wherein the image processing unit is constructed to judge that manufacturing failure has occurred, when at least part of the test object is not positioned in the target arrangement area on the blank.

Further, a different mode of the present invention comprises the inspection device for the smoking-article packaging container in the above mode, wherein the image processing unit is constructed to judge that manufacturing failure has occurred, when the test object is not detected in the process for detecting the test object.

Further, a different mode of the present invention comprises the inspection device for the smoking-article packaging container in the above mode, wherein the test object is emulsion, sol, or liquid applied to the blank.

Further, a different mode of the present invention comprises the inspection device for the smoking-article packaging container in the above mode, wherein the test object is an adhesive which is applied to the blank for constructing the packaging container from the blank.

Further, a different mode of the present invention is an apparatus for manufacturing a smoking-article packaging container, and the device comprises: the inspection device for the smoking-article packaging container in the above mode; a conveying device for conveying the blank; a supplying device for supplying the test object on the blank; and an assembling device for constructing the packaging container from the blank.

Further, a different mode of the present invention is an inspection method for judging a position shift of a test object to be inspected which is arranged on a blank, from which a packaging container for a smoking article can be constructed, and has a color similar to a color of the blank, and the inspection method for the smoking-article packaging container comprises: a step for illuminating, from a first direction, the blank which includes the test object; a step for taking an image of the blank including the test object from a second direction that is different from the first direction, and generating image data; and a step for identifying, based on brightness, a relative position of the test object with respect to the blank in the image data, wherein the step for identifying comprises: a step for identifying a position of the blank by detecting an edge of the blank in the image data; a step for dynamically setting in the image data a target arrangement area for the test object by using the detected edge of the blank as a position reference; a step for detecting the test object based on the brightness in the image data; a step for identifying relative positions of the detected test object and the target arrangement area; and a step for judging, based on the relative positions, whether the test object is positioned in the target arrangement area on the blank.

### ADVANTAGEOUS EFFECTS OF INVENTION

According to the present invention, a position shift of an adhesive, which is applied to a blank and has a color identical with or similar to a color of the blank, can be judged and a packaging container for a smoking article can be manufactured.

### BRIEF DESCRIPTION OF DRAWINGS

Fig. 1 is a schematic configuration diagram of a packaging-container manufacturing apparatus according to an embodiment of the present invention.
Fig. 2 is a figure showing schematic shapes of a blank, a smoking article, and a packaging container.
Fig. 3 is a schematic configuration diagram of an inspection device according to an embodiment of the present invention.
Fig. 4 is a flow chart showing an image processing method for inspecting an object to be tested, according to an embodiment of the present invention.
Fig. 5 is a figure showing an example of image data of an object of image processing.
Fig. 6 is a figure showing positional change of a blank in image data.

### DETAILED DESCRIPTION

In the following description, embodiments of the present invention as well as examples will be explained with reference to the figures.

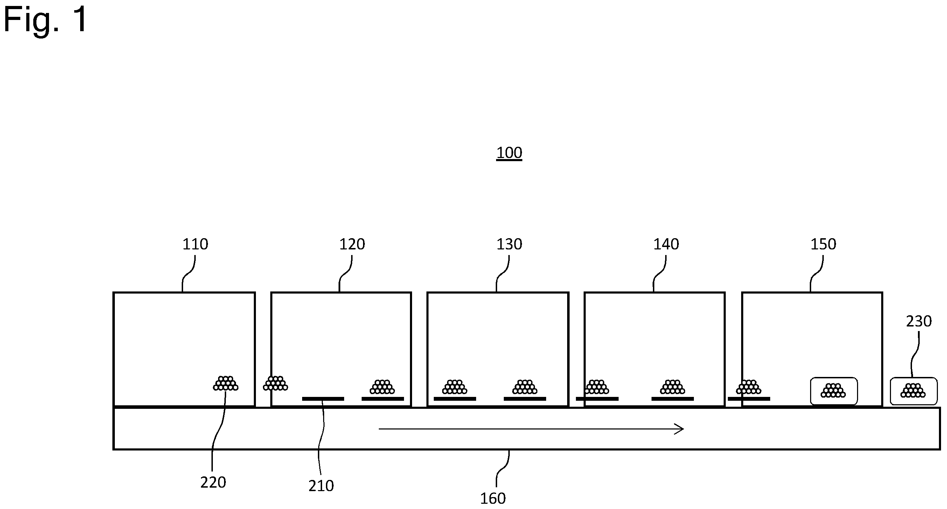

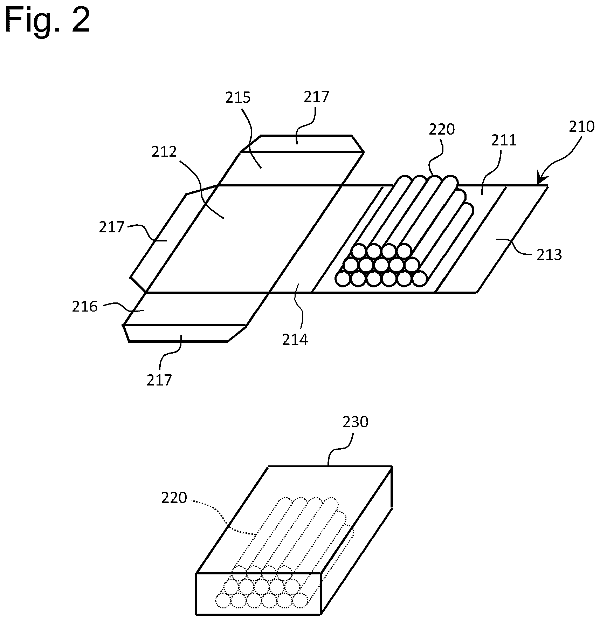

Fig. 1 is a schematic configuration diagram of a packaging-container manufacturing apparatus 100 for manufacturing packaging containers for smoking articles, according to an embodiment of the present invention. Fig. 2 is a figure showing schematic shapes of a blank 210, a smoking article 220, and a packaging container 230 which are handled in the packaging-container manufacturing apparatus 100. The construction of each of the packaging-container manufacturing apparatus 100, the blank 210, the smoking article 220, and the packaging container 230 will be explained with reference to Fig. 1 and Fig. 2.

The packaging-container manufacturing apparatus 100 comprises a smoking-article supplying device 110, a blank supplying device 120, an adhesive supplying device 130, an inspection device 140, an assembling device 150, and a conveying device 160. The packaging-container manufacturing apparatus 100 is an apparatus for constructing the packaging container 230 from the blank 210. The packaging container 230 is that into which the smoking article 220 is housed and outputted as a finished product from an outlet of the conveying device 160.

The smoking-article supplying device 110 supplies the smoking article 220 to a part on the conveying device 160. The blank supplying device 120 supplies the blank 210 to a part on the conveying device 160. The conveying device 160 conveys the smoking article 220 and the blank 210 in the downstream direction. The adhesive supplying device 130 and the inspection device 140 are positioned on the downstream side of the conveying device 160, and the assembling device 150 is positioned on the further downstream side thereof. In the packaging-container manufacturing apparatus 100 shown in Fig. 1, the smoking-article supplying device 110 is arranged on the uppermost stream part of the conveying device 160, however, the above construction is an example, and the position on which the smoking-article supplying device 110 is arranged is not specifically limited. For example, the smoking-article supplying device 110 may be positioned just upstream the assembling device 150.

The smoking article 220 may be a cigarette(s), or electric-heating-type tobacco. Typically, the smoking article 220 has an elongated cylindrical shape. For example, plural smoking articles 220 are continuously supplied, or a bundle of a number of smoking articles which are to be housed in a single packaging container 230, is supplied to a part on the conveying device 160. A bundle of smoking articles may be wrapped by a packaging material (for example, aluminum foil) for preventing the respective smoking articles in the bundle from coming apart.

The blank 210 is a paperboard which has been cut and processed to have a shape that makes it possible to construct therefrom a box-shape packaging container 230 which can house the smoking articles 220. For example, the blank 210 comprises a front face 211, a back face 212, side faces 213 and 214, a top face 215, and a bottom face 216. The blank 210 further comprises margins for pasting 217, to each of which an adhesive is applied for constructing the packaging container 230 from the blank 210. It should be reminded that a simplified form of the blank 210 is drawn in Fig. 2, for convenience of explanation. The actual blank 210, from which the packaging container 230 is constructed, may have a more complicated shape, the number of faces, or arrangement of the respective faces different from that shown in Fig. 2. For example, a blank and a packaging container such as those disclosed in Figs. 1-3 of PCT international publication No. WO 2012/131834 may be adopted in the present embodiment.

A brand name, a pattern, an explanation relating to a product, and so on are printed by using various colors on the frontside surfaces (i.e., the faces forming the exterior of the packaging container 230) of the blank 210. On the other hand, the backside surfaces (i.e., the faces inside the packaging container 230) of the blank 210 are usually plain white. Further, surfaces of the pasting margins 217, to each of which an adhesive is applied, are also plain white.

The adhesive supplying device 130 supplies an adhesive to the pasting margin 217 in the blank 210 carried on the conveying device 160. For example, the adhesive supplying device 130 comprises a nozzle which is constructed to discharge a liquid adhesive. The adhesive supplying device 130 further comprises a sensor for detecting the conveying speed of the conveying device 160, or a sensor for detecting the position of each blank 210 on the conveying device 160. In synchronous with the moving speed of the conveyed blank 210 on the conveying device 160, the adhesive supplying device 130 aims at a predetermined position in the pasting margin 217 of each blank 210 and discharges a droplet of the adhesive thereto. An emulsion, sol, or liquid type adhesive is used as the adhesive. Regarding the color of the adhesive, it is supposed that it has a color that is the same as or similar to the color of the surface, to which the adhesive is applied, of the pasting margin 217 in the blank 210. In this regard, the similar colors means two colors that have tones similar to each other and difficult to optically or visually distinguish one from the other.

The inspection device 140 inspects whether the adhesive (hereinafter, this may be referred to as a test object) is being supplied to an appropriate position on the blank 210. The construction and operation of the inspection device 140 will be explained later.

The assembling device 150 forms the packaging container 230 by bending the blank 210 along predetermined bend lines to transform it to have a three dimensional form, bringing the pasting margins 217, to each of which the adhesive has been applied, to come in contact with predetermined parts of the blank, and making the adhesive be hardened. A predetermined number of smoking articles 220 is housed in the constructed packaging container 230. The assembling device 150 may put a protection film on the packaging container 230, in which smoking articles 220 have been housed, for protecting the packaging container 230 from being damaged. In the case that it is judged by the inspection device 140 that the adhesive has not been supplied to an appropriate position on the blank 210, assembling device 150 may stop operation to construct the packaging container 230 from the blank 210, or may exclude the blank 210, with respect to which it is judged that the adhesive has not been supplied to the appropriate position, from the line of the conveying device 160, for avoiding production of a defective product.

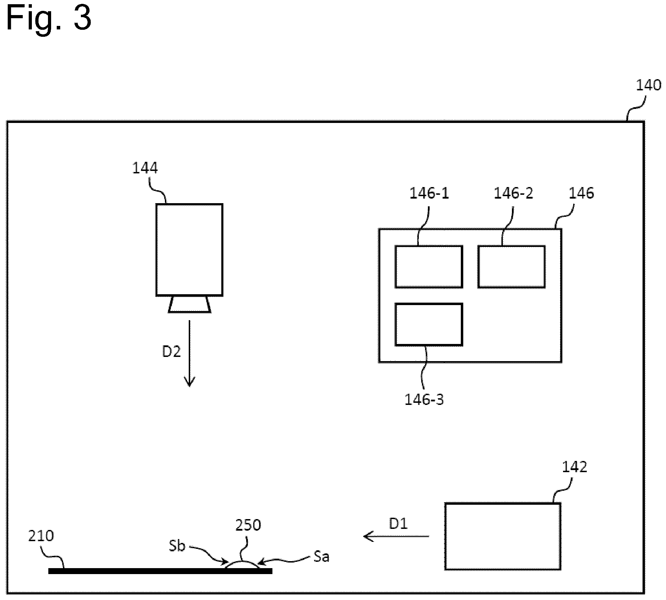

Fig. 3 is a schematic configuration diagram of the inspection device 140 according to an embodiment of the present invention. The inspection device 140 comprises an illumination unit 142, an imaging unit 144, and an image processing unit 146. The inspection device 140 is constructed to detect, by using an image of the blank 210 taken by the imaging unit 144, whether the test object is arranged in an appropriate position on the blank 210.

The illumination unit 142 is a light source for emitting illumination light to the blank 210 on the conveying device 160. The imaging unit 144 is an optical sensor for taking an image of the blank 210 on the conveying device 160 which is illuminated by the illumination light (especially, the pasting margins 217 and parts around them), generating electronic image data thereof, and outputting the data. As explained above, the face, to which the adhesive is applied, of the pasting margin 217 in the blank 210 and the adhesive (i.e., the test object) 250 are white, i.e., their colors are the same with each other, or their colors are similar to each other. Thus, in the case that the illumination unit 142 and the imaging unit 144 are arranged to illuminate or to take an image of the blank from the same direction, both the adhesive and the adhesive-application face are equally illuminated by the illumination light, so that it becomes difficult to discriminate the adhesive, which is the test object and considered to be that existing on the pasting margin 217, in the image data generated by the imaging unit 144.

In the inspection device 140 in the present embodiment, the illumination unit 142 is arranged to illuminate the blank 210 from a first direction D1, and the imaging unit 144 is arranged to take an image of the blank 210 from a second direction D2 that is different from the first direction D1, as shown in Fig. 3. More specifically, the illumination unit 142 is arranged to illuminate the blank 210 from the first direction D1 that is substantially parallel to the surface of the blank 210, and the imaging unit 144 is arranged to take an image of the blank 210 from the second direction D2 that is substantially vertical to the surface of the blank 210.

In this manner, since the first direction D1 that the illumination unit 142 illuminates the blank 210 therefrom and the second direction D2 that the imaging unit 144 takes an image of the blank 210 therefrom are different from each other, thus, when the adhesive (the test object) 250 on the blank 210 is viewed from the position of the imaging unit 144, a bright part Sa that appears bright since it is illuminated by the illumination light from the illumination unit 142 and a dark part Sb that is shaded since it is not illuminated by the illumination light can be observed on the surface thereof. Further, since the surface of the blank 210 is illuminated from the first direction D1 that is substantially parallel thereto, the brightness of the surface of the blank 210 becomes that between the brightness of the bright part Sa and the brightness of the dark part Sb. Accordingly, there are differences in brightness in the image data generated by the imaging unit 144; and, based on the differences in brightness, the adhesive (the test object), that has been applied to the white adhesive-application face of the blank 210 and is white or has a color similar to white, can be discriminated.

The above-explained arrangement of the illumination unit 142 and the imaging unit 144 is a mere example of the construction of the inspection device 140. For making it possible to discriminate a test object by using a brightness difference in image data, the illumination unit 142 and the imaging unit 144 may be arranged to have any positional relation ship that satisfies the condition that a bright part and a dark part can be generated on the surface of the test object 250 on the blank 210 by illumination light from the illumination unit 142, when the test object 250 is observed from the imaging unit 144.

The image processing unit 146 is a computer for processing image data generated by the imaging unit 144. The image processing unit 146 comprises, at least, a processor 146-1, a memory 146-2, and a communication interface 146-3. The memory 146-2 stores a computer program for executing image processing that will be explained later, other computer programs (for example, an operating system and so on), and various types of setting data. The communication interface 146-3 transmits/receives data to/from an external device. The communication interface 146-3 receives, at least, image data from the imaging unit 144. The received image data is temporarily stored in the memory 146-2. The processor 146-1 reads, from the memory 146-2, the image processing program and the image data received from the imaging unit 144, and performs processing according to the image processing program.

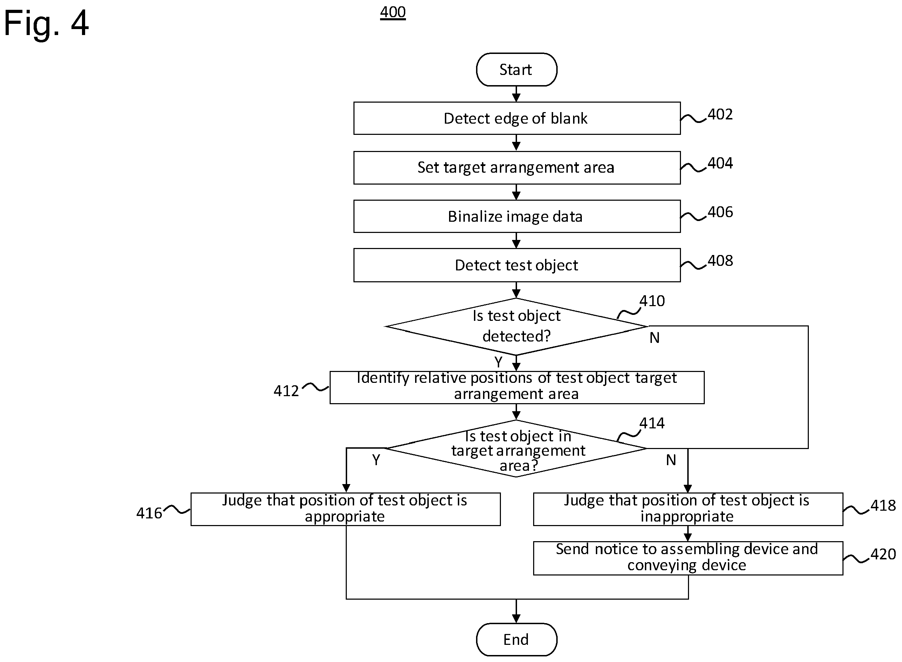

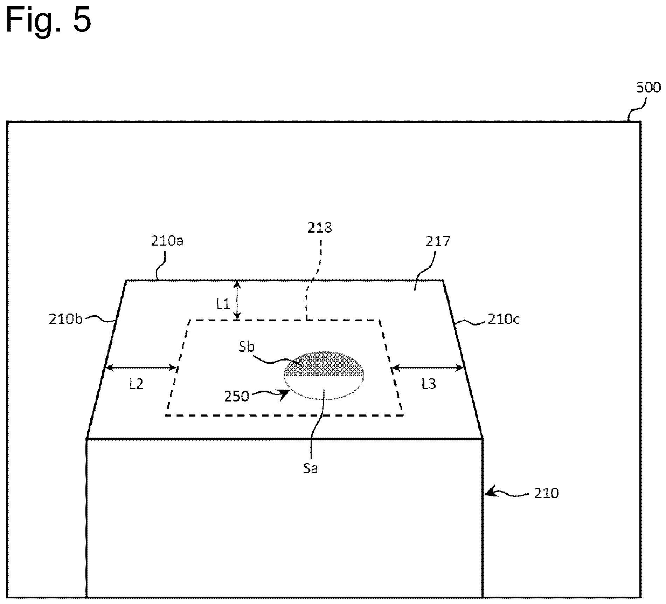

Fig. 4 is a flow chart showing an image processing method 400 for inspecting a test object on the blank 210, that is implemented by the image processing unit 146 according to an embodiment of the present invention. Although the image processing method 400 comprises plural processing steps, the respective processing steps may be performed in the order different from that shown in Fig. 4 and explained below, if technically or theoretically possible. Further, some processing steps may be omitted if they are not required. The image processing method 400 according to the present embodiment will b explained with reference to an example of image data 500 shown in Fig. 5.

In step 402, the processor 146-1 in the image processing unit 146 detects an end edge (an edge) of the blank 210 in the image date 500. In the present embodiment, it is supposed that the brightness of the blank 210 and the brightness of the background of the blank 210 are largely different from each other (for example, the background is sufficiently darker than the blank 210), or they have colors different from each other. The processor 146-1 can detect the edge of the blank 210 based on a brightness difference or color difference in the image data. As a result, the position of the blank 210 in the image data is identified.

In step 404, the processor 146-1 in the image processing unit 146 sets a target arrangement area 218 for the test object (the adhesive) in the inside of the blank 210 in the image data 500. The target arrangement area 218 is an area which is part of the pasting margin 217 in the blank 210, and to which the adhesive, which is the test object, is expected to be applied. If the adhesive exists in the target arrangement area 218 in the pasting margin 217 and does not protrude to the outside of the target arrangement area 218, a quality packaging container 230 can be constructed from the blank 210. On the other hand, if the adhesive does not exist in the target arrangement area 218 in the pasting margin 217, or if the adhesive protrudes to the outside of the target arrangement area 218 although it exists in the target arrangement area 218, a packaging container 230 constructed from the blank 210 will become a defective product.

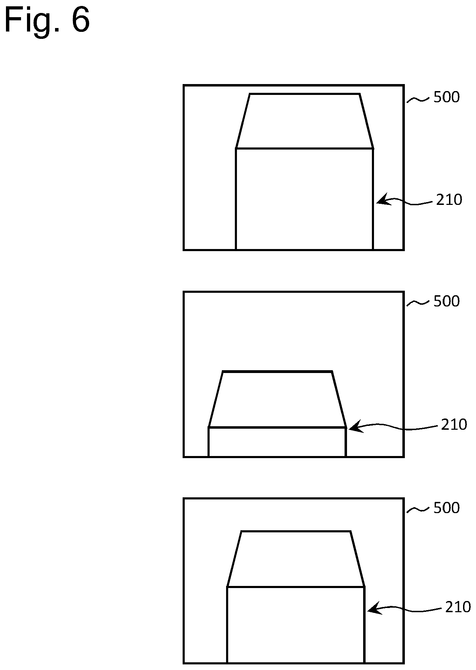

The processor 146-1 in the image processing unit 146 sets the target arrangement area 218 by using, as a reference, the position of the edge of the blank 210 in the image data 500. The blank 210, which is a material of the packaging container 230, is made of a paperboard, so that it is likely to be deformed, i.e., bent, curved, or the like, when it is conveyed by the conveying device 160. Thus, even if the imaging unit 144 takes an image of the blank 210, which moves at predetermined speed, at appropriate timing, the position of the pasting margin 217 in the fringe of the blank 210 becomes unstable due to bending, curving, or the like of the paperboard, so that the positions of the pasting margins 217 taken as image data may change blank 210 by blank 210. The above state is shown in Fig. 6. In the image processing method 400 according to the present embodiment, the position of the edge of the blank 210 in the actually taken image data 500 is used as a reference and the target arrangement area 218 is set dynamically, so that the target arrangement area 218 can be set to be positioned in a correct position, even if the position of the blank 210 in the image data 500 is unstable.

More specifically, the processor 146-1 in the image processing unit 146 sets the target arrangement area 218 to be positioned in a position that is a predetermined distance away from the edge of the blank 210 in the image data 500. In the example shown in Fig. 5, the target arrangement area 218 is set to be positioned in a position that is distant from a first edge 210a of the blank 210 by distance L1, distant from a second edge 210b of the blank 210 by distance L2, and distant from a third edge 210c of the blank 210 by distance L3 in the image data 500. The distances L1, L2, and L3 are determined in advance in relation to each product (i.e., the type of the blank 210 or the packaging container 230), for example, and stored in the memory 146-2. The processor 146-1 sets the target arrangement area 218 in such a manner that the target arrangement area 218 has edges which are positioned in respective positions distant by distances L1, L2, and L3 from the respective edges of the blank 210, that have been detected in the image data 500.

In step 406, the processor 146-1 in the image processing unit 146 binalizes the image data. For example, with respect to each pixel in the image data, the processor 146-1 converts a pixel value to a first value (for example, 1) when the pixel value is equal to or greater than a predetermined value, and converts the pixel value to a second value (for example, 0) when the pixel value is less than the predetermined value. The predetermined value that is used as a reference when performing the binarization process may be a value corresponding to brightness higher than the brightness of the dark part Sb of the test object and lower than the brightness of the bright part Sa of the test object and the surface of the blank 210, for example. In the above case, the image data is converted to a binary image wherein the dark part Sb of the test object is represented by a black color, and other parts are represented by a white color. Further, for example, the predetermined value that is used as a reference when performing the binarization process may be a value corresponding to brightness higher than the brightness of the dark part Sb of the test object and the surface of the blank 210 and lower than the brightness of the bright part Sa of the test object. In the above case, the image data is converted to a binary image wherein the bright part Sa of the test object is represented by a white color, and other parts are represented by a black color.

In step 408, the processor 146-1 in the image processing unit 146 detects the test object in the binary image data. In the above-explained example, the binary image data represents an image wherein the dark part Sb of the test object 250 is black and other parts are white, or an image wherein the bright part Sa of the test object 250 is white and other parts are black. Thus, the processor 146-1 can identify an image area corresponding to the dark part Sb or the bright part Sa of the test object from the binary image data.

In step 410, the processor 146-1 in the image processing unit 146 judges whether the test object has been detected in step 408. The process proceeds to step 412 if the test object has been detected, and the process proceeds to step 418 if the test object has not been detected.

In step 412, the processor 146-1 in the image processing unit 146 identifies relative positions of the test object 250 that has been detected in step 408 in the image data 500, and the target arrangement area 218 that has been set in step 404.

In step 414, the processor 146-1 in the image processing unit 146 judges, based on the relative positions of the target arrangement area 218 and the detected test object 250, whether the test object 250 exists in the target arrangement area 218. If the test object 250 exists in the target arrangement area 218 and does not protrude to the outside of the target arrangement area 218, the process proceeds to step 416. If the test object 250 does not exist in the target arrangement area 218, or if the adhesive protrudes to the outside of the target arrangement area 218 although it exists in the target arrangement area 218, the process proceeds to step 418.

In step 416, the processor 146-1 in the image processing unit 146 judges that the test object (i.e., the adhesive) 250 has been supplied to an appropriate position in the pasting margin 217 in the blank 210.

In step 418, the processor 146-1 in the image processing unit 146 judges that the test object (i.e., the adhesive) 250 has not been supplied to an appropriate position in the pasting margin 217 in the blank 210.

In step 420, the processor 146-1 in the image processing unit 146 notifies the assembling device 150 and the conveying device 160 of the state that the test object (i.e., the adhesive) 250 has not been supplied to an appropriate position in the pasting margin 217 in the blank 210. In response to the notice, the assembling device 150 operates to stop the process for constructing the packaging container 230, or exclude the constructed packaging container 230, as explained above. Further, the conveying device 160 may stop its conveyance action in response to reception of the notice from the image processing unit 146.

The processor 146-1 in the image processing unit 146 performs the image processing method 400 with respect to each blank 210 conveyed by the conveying device 160.

Although the embodiments of the present embodiments have been explained in the above description, the present invention is not limited thereto, and various changes are possible without departing from the scope of the present invention, as defined by the appended claims.

### REFERENCE SIGNS LIST

- 100: Packaging container manufacturing apparatus
- 110: Smoking-article supplying device
- 120: Blank supplying device
- 130: Adhesive supplying device
- 140: Inspection device
- 142: Illumination unit
- 144: Imaging unit
- 146: Image processing unit
- 146-1: Processor
- 146-2: Memory
- 146-3: Communication interface
- 150: Assembling device
- 160: Conveying device
- 210: Blank
- 217: Margin for pasting
- 218: Target arrangement area
- 220: Smoking article
- 230: Packaging container
- 250: Test object

## Claims

1. An inspection device (140) for judging a position shift of a test object (250) to be inspected which is arranged on a blank (210), from which a packaging container (230) for a smoking article can be constructed, and has a color similar to a color of the blank (210), comprising:
an illumination unit (142) for illuminating, from a first direction, the blank (210) which includes the test object (250);
an imaging unit (144) for taking an image of the blank (210) including the test object (250) from a second direction that is different from the first direction, and generating image data (500); and
an image processing unit (146) for identifying, based on brightness, a relative position of the test object (250) with respect to the blank (210) in the image data (500),
wherein the image processing unit (146) is constructed to perform:
a process for identifying a position of the blank (210) by detecting an edge of the blank (210) in the image data (500);
a process for dynamically setting in the image data (500) a target arrangement area (218) for the test object (250) by using the detected edge of the blank (210) as a position reference;
a process for detecting the test object (250) based on the brightness in the image data (500);
a process for identifying relative positions of the detected test object (250) and the target arrangement area (218); and
a process for judging, based on the relative positions, whether the test object (250) is positioned in the target arrangement area (218) on the blank (210).

2. The inspection device (140) for the smoking-article packaging container (230) recited in Claim 1, wherein the first direction and the second direction are set to have positional relationship that satisfies a condition that a bright part and a dark part are formed on a surface of the test object (250), that is viewed from a position of the imaging unit (144), by illumination by the illumination unit (142).

3. The inspection device (140) for the smoking-article packaging container (230) recited in Claim 2, wherein the first direction and the second direction are set to have positional relationship that satisfies a condition that the surface of the blank (210) is darker than the bright part and brighter than the dark part.

4. The inspection device (140) for the smoking-article packaging container (230) recited in any one of Claims 1-3, wherein the first direction is substantially parallel to the surface of the blank (210).

5. The inspection device (140) for the smoking-article packaging container (230) recited in any one of Claims 1-4, wherein the second direction is substantially vertical to the surface of the blank (210).

6. The inspection device (140) for the smoking-article packaging container (230) recited in Claim 1, wherein the image processing unit (146) is constructed to identify, in the image data (500), an image area which has brightness corresponding to at least one of the bright part and the dark part on the surface of the test object (250), in the process for detecting the test object (250).

7. The inspection device (140) for the smoking-article packaging container (230) recited in Claim 1, wherein the image processing unit (146) is constructed to set the target arrangement area (218) to be positioned in a position, that is a predetermined distance away from the detected edge of the blank (210), in the image data (500), in the process for setting the target arrangement area (218).

8. The inspection device (140) for the smoking-article packaging container (230) recited in any one of Claims 1-7, wherein the image processing unit (146) is constructed to perform a process for binarizing the image data (500), before performing the process for detecting the test object (250).

9. The inspection device (140) for the smoking-article packaging container (230) recited in any one of Claims 1-8 wherein the image processing unit (146) is constructed to judge that manufacturing failure has occurred, when at least part of the test object (250) is not positioned in the target arrangement area (218) on the blank (210).

10. The inspection device (140) for the smoking-article packaging container (230) recited in any one of Claims 1-9, wherein the image processing unit (146) is constructed to judge that manufacturing failure has occurred, when the test object (250) is not detected in the process for detecting the test object (250).

11. The inspection device (140) for the smoking-article packaging container (230) recited in any one of Claims 1-10, wherein the test object (250) is emulsion, sol, or liquid applied to the blank (210).

12. The inspection device (140) for the smoking-article packaging container (230) recited in any one of Claims 1-11, wherein the test object (250) is an adhesive which is applied to the blank (210) for constructing the packaging container (230) from the blank (210).

13. An apparatus (100) for manufacturing a smoking-article packaging container (230) comprising:
the inspection device (140) for the smoking-article packaging container (230) recited in any one of Claims 1-12;
a conveying device (160) for conveying the blank (210);
a supplying device (130) for supplying the test object (250) on the blank (210); and
an assembling device (150) for constructing the packaging container (230) from the blank (210).

14. An inspection method for judging a position shift of a test object (250) to be inspected which is arranged on a blank (210), from which a packaging container (230) for a smoking article can be constructed, and has a color similar to a color of the blank (210), comprising:
a step for illuminating, from a first direction, the blank (210) which includes the test object (250);
a step for taking an image of the blank (210) including the test object (250) from a second direction that is different from the first direction, and generating image data (500); and
a step for identifying, based on brightness, a relative position of the test object (250) with respect to the blank (210) in the image data (500),
wherein the step for identifying comprises:
a step for identifying a position of the blank (210) by detecting an edge of the blank (210) in the image data (500);
a step for dynamically setting in the image data (500) a target arrangement area (218) for the test object (250) by using the detected edge of the blank (210) as a position reference;
a step for detecting the test object (250) based on the brightness in the image data (500);
a step for identifying relative positions of the detected test object (250) and the target arrangement area (218); and
a step for judging, based on the relative positions, whether the test object (250) is positioned in the target arrangement area (218) on the blank (210).

## Patentansprüche

1. Vorrichtung zur Inspektion (140) zum Beurteilen einer Positionsverlagerung eines zu inspizierenden Testgegenstands (250), der auf einem Rohling (210) angeordnet ist, aus dem ein Verpackungsbehälter (230) für einen Rauchartikel konstruiert werden kann und der eine Farbe ähnlich einer Farbe des Rohlings (210) aufweist, umfassend:
eine Beleuchtungseinheit (142) zur Beleuchtung des Rohlings (210), der den Testgegenstand (250) einschließt, aus einer ersten Richtung;
eine Bildgebungseinheit (144) zur Aufnahme eines Bildes des Rohlings (210), einschließlich des Testgegenstands (250), aus einer zweiten Richtung, die sich von der ersten Richtung unterscheidet, und zum Erzeugen von Bilddaten (500); und
eine Bildverarbeitungseinheit (146) zur Identifizierung, basierend auf Helligkeit, einer relativen Position des Testgegenstands (250) in Bezug auf den Rohling (210) in den Bilddaten (500);
wobei die Bildverarbeitungseinheit (146) konstruiert ist, um Folgendes durchzuführen:
einen Prozess zur Identifizierung einer Position des Rohlings (210) durch Erfassung einer Kante des Rohlings (210) in den Bilddaten (500);
einen Prozess zur dynamischen Einstellung eines Zielanordnungsbereichs (218) für den Testgegenstand (250) in den Bilddaten (500) unter Verwendung der erfassten Kante des Rohlings (210) als Positionsreferenz;
einen Prozess zur Erfassung des Testgegenstands (250) basierend auf der Helligkeit in den Bilddaten (500);
einen Prozess zur Identifizierung von relativen Positionen des erfassten Testgegenstands (250) und des Zielanordnungsbereichs (218); und
einen Prozess zur Beurteilung, basierend auf den relativen Positionen, ob der Testgegenstand (250) im Zielanordnungsbereich (218) auf dem Rohling (210) positioniert ist.

2. Vorrichtung zur Inspektion (140) für den Rauchartikelverpackungsbehälter (230) gemäß Anspruch 1, wobei die erste Richtung und die zweite Richtung so eingestellt werden, dass sie eine Positionsbeziehung aufweisen, die eine Bedingung erfüllt, dass ein heller Teil und ein dunkler Teil auf einer Oberfläche des Testgegenstands (250), die von einer Position der Bildgebungseinheit (144) betrachtet wird, durch Beleuchtung durch die Beleuchtungseinheit (142) gebildet werden.

3. Vorrichtung zur Inspektion (140) für den Rauchartikelverpackungsbehälter (230) gemäß Anspruch 2, wobei die erste Richtung und die zweite Richtung so eingestellt werden, dass sie eine Positionsbeziehung aufweisen, die eine Bedingung erfüllt, dass die Oberfläche des Rohlings (210) dunkler ist als der helle Teil und heller ist als der dunkle Teil.

4. Vorrichtung zur Inspektion (140) für den Rauchartikelverpackungsbehälter (230) gemäß einem der Ansprüche 1-3, wobei die erste Richtung im Wesentlichen parallel zur Oberfläche des Rohlings (210) ist.

5. Vorrichtung zur Inspektion (140) für den Rauchartikelverpackungsbehälter (230) gemäß einem der Ansprüche 1-4, wobei die zweite Richtung im Wesentlichen vertikal zur Oberfläche des Rohlings (210) ist.

6. Vorrichtung zur Inspektion (140) für den Rauchartikelverpackungsbehälters (230) gemäß Anspruch 1, wobei die Bildverarbeitungseinheit (146) konstruiert ist, um im Prozess zur Erfassung des Testgegenstands (250) in den Bilddaten (500) einen Bildbereich zu identifizieren, der eine Helligkeit aufweist, die mindestens einem des hellen Teils und des dunklen Teils auf der Oberfläche des Testgegenstands (250) entspricht.

7. Vorrichtung zur Inspektion (140) für den Rauchartikelverpackungsbehälter (230) gemäß Anspruch 1, wobei die Bildverarbeitungseinheit (146) konstruiert ist, um im Prozess zum Einstellen des Zielanordnungsbereichs (218) den zu positionierenden Zielanordnungsbereich (218) in einer Position einzustellen, die in den Bilddaten (500) um einen vorbestimmten Abstand von der erfassten Kante des Rohlings (210) entfernt ist.

8. Vorrichtung zur Inspektion (140) für den Rauchartikelverpackungsbehälter (230) gemäß einem der Ansprüche 1-7, wobei die Bildverarbeitungseinheit (146) konstruiert ist, um einen Prozess zum Binarisieren der Bilddaten (500) vor Durchführen des Prozesses zum Erfassen des Testgegenstandes (250) durchzuführen.

9. Vorrichtung zur Inspektion (140) für den Rauchartikelverpackungsbehälter (230) gemäß einem der Ansprüche 1-8, wobei die Bildverarbeitungseinheit (146) konstruiert ist, um zu beurteilen, dass ein Herstellungsfehler aufgetreten ist, wenn mindestens ein Teil des Testgegenstands (250) nicht im Zielanordnungsbereich (218) auf dem Rohling (210) positioniert ist.

10. Vorrichtung zur Inspektion (140) für den Rauchartikelverpackungsbehälter (230) gemäß einem der Ansprüche 1-9, wobei die Bildverarbeitungseinheit (146) konstruiert ist, um zu beurteilen, dass ein Herstellungsfehler aufgetreten ist, wenn der Testgegenstand (250) nicht im Prozess zum Erfassen des Testgegenstands (250) erfasst wird.

11. Vorrichtung zur Inspektion (140) für den Rauchartikelverpackungsbehälter (230) gemäß einem der Ansprüche 1-10, wobei der Testgegenstand (250) Emulsion, Sol oder Flüssigkeit ist, die/das an den Rohling (210) angebracht wird.

12. Vorrichtung zur Inspektion (140) für den Rauchartikelverpackungsbehälter (230) gemäß einem der Ansprüche 1-11, wobei der Testgegenstand (250) ein Haftmittel ist, das zum Konstruieren des Verpackungsbehälters (230) aus dem Rohling (210) an den Rohling (210) angebracht wird.

13. Einrichtung (100) zur Herstellung eines Rauchartikelverpackungsbehälters (230), umfassend:
die Vorrichtung zur Inspektion (140) für den Rauchartikelverpackungsbehälter (230) gemäß einem der Ansprüche 1-12;
eine Fördervorrichtung (160) zum Fördern des Rohlings (210);
eine Zufuhrvorrichtung (130) zur Zuführung des Testgegenstands (250) auf dem Rohling (210); und eine Montagsvorrichtung (150) zum Konstruieren des Verpackungsbehälters (230) aus dem Rohling (210).

14. Inspektionsverfahren zur Beurteilung einer Positionsverlagerung eines zu inspizierenden Testgegenstands (250), der auf einem Rohling (210) angeordnet ist, aus dem ein Rauchartikelverpackungsbehälter (230) konstruiert werden kann und der eine Farbe ähnlich einer Farbe des Rohlings (210) aufweist, umfassend:
einen Schritt zur Beleuchtung des Rohlings (210), der den Testgegenstand (250) einschließt, aus einer ersten Richtung;
einen Schritt zur Aufnahme eines Bildes des Rohlings (210), einschließlich des Testgegenstands (250) aus einer zweiten Richtung, die sich von der ersten Richtung unterscheidet, und zum Erzeugen von Bilddaten (500); und
einen Schritt zur Identifizierung, basierend auf Helligkeit, einer relativen Position des Testgegenstands (250) in Bezug auf den Rohling (210) in den Bilddaten (500);
wobei der Schritt zur Identifizierung Folgendes umfasst:
einen Schritt zur Identifizierung einer Position des Rohlings (210) durch Erfassung einer Kante des Rohlings (210) in den Bilddaten (500);
einen Schritt zur dynamischen Einstellung eines Zielanordnungsbereichs (218) für den Testgegenstand (250) in den Bilddaten (500) unter Verwendung der erfassten Kante des Rohlings (210) als Positionsreferenz; einen Schritt zur Erfassung des Testgegenstands (250) basierend auf der Helligkeit der Bilddaten (500);
einen Schritt zur Identifizierung von relativen Positionen des erfassten Testgegenstands (250) und des Zielanordnungsbereichs (218); und
einen Schritt zur Beurteilung, basierend auf den relativen Positionen, ob der Testgegenstand (250) im Zielanordnungsbereich (218) auf dem Rohling (210) positioniert ist.

## Revendications

1. Dispositif d'inspection (140) pour juger un décalage de position d'un objet d'essai (250) destiné à être inspecté qui est agencé sur une ébauche (210), à partir de laquelle un contenant d'emballage (230) pour un article à fumer peut être construit, et présente une couleur similaire à une couleur de l'ébauche (210), comprenant :
une unité d'éclairage (142) pour éclairer, depuis une première direction, l'ébauche (210) qui inclut l'objet d'essai (250) ;
une unité d'imagerie (144) pour prendre une image de l'ébauche (210) incluant l'objet d'essai (250) depuis une seconde direction qui est différente de la première direction, et générer des données d'image (500) ; et
une unité de traitement d'image (146) pour identifier, sur la base de la luminosité, une position relative de l'objet d'essai (250) par rapport à l'ébauche (210) dans les données d'image (500),
dans lequel l'unité de traitement d'image (146) est construite pour réaliser :
un processus pour identifier une position de l'ébauche (210) en détectant un bord de l'ébauche (210) dans les données d'image (500) ;
un processus pour définir dynamiquement dans les données d'image (500) une zone d'agencement cible (218) pour l'objet d'essai (250) en utilisant le bord détecté de l'ébauche (210) en tant qu'une référence de position ;
un processus pour détecter l'objet d'essai (250) sur la base de la luminosité dans les données d'image (500) ;
un processus pour identifier des positions relatives de l'objet d'essai (250) détecté et de la zone d'agencement cible (218) ; et
un processus pour juger, sur la base des positions relatives, si l'objet d'essai (250) est positionné dans la zone d'agencement cible (218) sur l'ébauche (210).

2. Dispositif d'inspection (140) pour le contenant d'emballage (230) d'article à fumer selon la revendication 1, dans lequel la première direction et la seconde direction sont définies de manière à présenter une relation positionnelle qui satisfait à une condition selon laquelle une partie claire et une partie sombre sont formées sur une surface de l'objet d'essai (250), qui est observée depuis une position de l'unité d'imagerie (144), par éclairage de l'unité d'éclairage (142).

3. Dispositif d'inspection (140) pour le contenant d'emballage (230) d'article à fumer selon la revendication 2, dans lequel la première direction et la seconde direction sont définies de manière à présenter une relation positionnelle qui satisfait à une condition selon laquelle la surface de l'ébauche (210) est plus sombre que la partie claire et plus claire que la partie sombre.

4. Dispositif d'inspection (140) pour le contenant d'emballage (230) d'article à fumer selon l'une quelconque des revendications 1 à 3, dans lequel la première direction est substantiellement parallèle à la surface de l'ébauche (210).

5. Dispositif d'inspection (140) pour le contenant d'emballage (230) d'article à fumer selon l'une quelconque des revendications 1 à 4, dans lequel la seconde direction est substantiellement perpendiculaire à la surface de l'ébauche (210).

6. Dispositif d'inspection (140) pour le contenant d'emballage (230) d'article à fumer selon la revendication 1, dans lequel l'unité de traitement d'image (146) est construite pour identifier, dans les données d'image (500), une zone d'image qui présente une luminosité correspondant à au moins une de la partie claire et de la partie sombre sur la surface de l'objet d'essai (250), dans le processus pour détecter l'objet d'essai (250).

7. Dispositif d'inspection (140) pour le contenant d'emballage (230) d'article à fumer selon la revendication 1, dans lequel l'unité de traitement d'image (146) est construite pour définir la zone d'agencement cible (218) de manière à ce qu'elle soit positionnée dans une position, qui se trouve à une distance prédéterminée du bord détecté de l'ébauche (210), dans les données d'image (500), dans le processus pour définir la zone d'agencement cible (218).

8. Dispositif d'inspection (140) pour le contenant d'emballage (230) d'article à fumer selon l'une quelconque des revendications 1 à 7, dans lequel l'unité de traitement d'image (146) est construite pour réaliser un processus pour binariser les données d'image (500), avant de réaliser le processus pour détecter l'objet d'essai (250).

9. Dispositif d'inspection (140) pour le contenant d'emballage (230) d'article à fumer selon l'une quelconque des revendications 1 à 8, dans lequel l'unité de traitement d'image (146) est construite pour juger qu'une défaillance de fabrication s'est produite, lorsqu'au moins une partie de l'objet d'essai (250) n'est pas positionnée dans la zone d'agencement cible (218) sur l'ébauche (210).

10. Dispositif d'inspection (140) pour le contenant d'emballage (230) d'article à fumer selon l'une quelconque des revendications 1 à 9, dans lequel l'unité de traitement d'image (146) est construite pour juger qu'une défaillance de fabrication s'est produite, lorsque l'objet d'essai (250) n'est pas détecté dans le processus pour détecter l'objet d'essai (250).

11. Dispositif d'inspection (140) pour le contenant d'emballage (230) d'article à fumer selon l'une quelconque des revendications 1 à 10, dans lequel l'objet d'essai (250) est une émulsion, un sol, ou un liquide appliqué sur l'ébauche (210).

12. Dispositif d'inspection (140) pour le contenant d'emballage (230) d'article à fumer selon l'une quelconque des revendications 1 à 11, dans lequel l'objet d'essai (250) est un adhésif qui est appliqué sur l'ébauche (210) pour construire le contenant d'emballage (230) à partir de l'ébauche (210).

13. Appareil (100) pour fabriquer un contenant d'emballage (230) d'article à fumer comprenant :
le dispositif d'inspection (140) pour le contenant d'emballage (230) d'article à fumer selon l'une quelconque des revendications 1 à 12 ;
un dispositif d'acheminement (160) pour acheminer l'ébauche (210) ;
un dispositif de fourniture (130) pour fournir l'objet d'essai (250) sur l'ébauche (210) ; et un dispositif d'assemblage (150) pour construire le contenant d'emballage (230) à partir de l'ébauche (210).

14. Procédé d'inspection pour juger un décalage de position d'un objet d'essai (250) destiné à être inspecté qui est agencé sur une ébauche (210), à partir de laquelle un contenant d'emballage (230) pour un article à fumer peut être construit, et présente une couleur similaire à une couleur de l'ébauche (210), comprenant :
une étape pour éclairer, depuis une première direction, l'ébauche (210) qui inclut l'objet d'essai (250) ;
une étape pour prendre une image de l'ébauche (210) incluant l'objet d'essai (250) depuis une seconde direction qui est différente de la première direction, et générer des données d'image (500) ; et
une étape pour identifier, sur la base de la luminosité, une position relative de l'objet d'essai (250) par rapport à l'ébauche (210) dans les données d'image (500),
dans lequel l'étape pour identifier comprend :
une étape pour identifier une position de l'ébauche (210) en détectant un bord de l'ébauche (210) dans les données d'image (500) ;
une étape pour définir dynamiquement dans les données d'image (500) une zone d'agencement cible (218) pour l'objet d'essai (250) en utilisant le bord détecté de l'ébauche (210) en tant qu'une référence de position ; une étape pour détecter l'objet d'essai (250) sur la base de la luminosité dans les données d'image (500) ;
une étape pour identifier des positions relatives de l'objet d'essai (250) détecté et de la zone d'agencement cible (218) ; et
une étape pour juger, sur la base des positions relatives, si l'objet d'essai (250) est positionné dans la zone d'agencement cible (218) sur l'ébauche (210).
